# EUROPEAN PATENT APPLICATION

(11) **EP 0 886 359 A1**
(43) Date of publication of application: **23.12.1998**
(21) Application number: 98500125.4
(22) Date of filing: 25.05.1998
(51) Int. Cl.: H02G 3/04

(54) **Precutting system for the obtention of channel tabs and the channels obtained with the same**

(30) Priority: 18.06.1997 ES 9701319
(71) Applicant: Quintela, S.A., 08850 Gava, Barcelona (ES)
(72) Inventor: Rodriguez Gil, Salvador, 08850 Gava (Barcelona) (ES); Rufas Martinez, José Ma., 08850 Gava (Barcelona) (ES)
(74) Representative: Perez Bonal, Bernardo

(57) **Abstract**

This invention is characterized by the provision of notches which are internal to the channel, and which define an intermediate piece between tabs and which determine angular slots which facilitate the final extraction of the tabs by the user, for the insertion or extraction of cables in the laying of cable lines.

## Description

### OBJECT OF THE INVENTION

The invention which is herewith recommended, consists of a precutting system for the obtention of channel tabs and channel obtained with the same from among the systems which, with the corresponding precutting, define said alignments of tabs at the opposed lateral sides of the cable holding channels.

This invention is characterized by the provision of notches, internal to the channel, which define an intermediate piece between tabs which, due to their special shape, facilitate the final extraction of the tabs by the user, in order to insert or extract the cables in the laying of cable lines.

### BACKGROUND OF THE INVENTION

At the present moment, the only known industrial system for the obtention of precuts of elastic strips or tabs finished off with attachment claws for the cover of the channel, is the one which provides, at the exit of the extruder, rotational and adjustable rollers, which internally perform a hot longitudinal scoring at a set distance from the base of the channel and which additionally has to coincide with the perforating die assembled at the end of the extrusion line, of around ten meters length.

This arrangement of continuous scorings forces an accurate corresponding of the cutting edge of the base of the die with said precutting line, said correspondence not capable of being maintained indefinitely by the logical functional maladjustments and which occasionally, forces a removal of the already constructed channels.

The applicant does not know of the existence of means for the construction of channels which, without including said perforation lines, facilitate the separation of the strips, similarly making use of the heat maintained by the channel, including a precutting system which prevents said rejection problems of the previously indicated conventional construction materials.

### DESCRIPTION OF THE INVENTION

The invention which is the object of the present specification refers to a precutting system for the subsequent obtention of strips or tabs of cable holding channels from the systems which include said tab alignments at the lateral sides, larger and opposed, of said channels.

To such purposes the hot scored arrangement of the perforation lines of conventional channels is replaced by a multiplicity of antagonistic groups of notches, placed at the respective bases of each wing of the "U" which defines the base channel generally perforated as per Standard DIN, said antagonistic groupings being placed an equal distances, in order that the resultant tabs from the extraction of the pieces result to be equidistant.

Said pieces are plates of rectangular cross section, regular or irregular, the surface of which shall correspond with the intermediate space between said tabs or strips.

The notches are constructed with sharp edges and likewise, profiled.

Once the perforating operation has finished and the channel ready for use for inserting or extracting a cable or a group of the same from the line to the operator, it suffices with bending the tab, which yields as from the angulation of the groups of opposed notches so as to finally break, extracting the same.

### DESCRIPTION OF THE DRAWINGS

In order to complement the description which is being carried out and with the object of facilitating a better and easier understanding of the characteristics of the invention, the present Specification is enclosed, forming integral part of the same, with a set of drawings in which, with illustrative and never limitative character, the following has been represented:

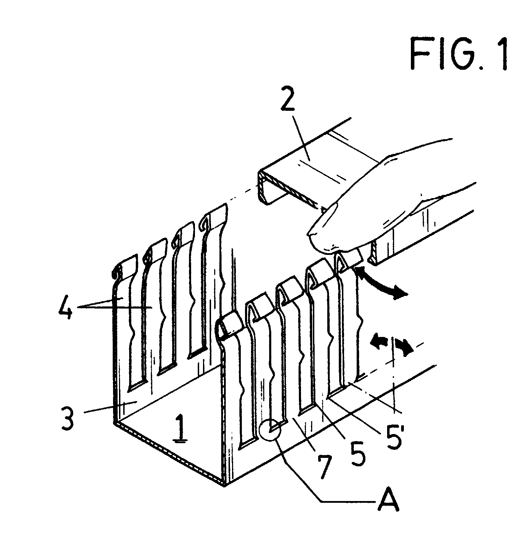

Figure 1 is a perspective, side elevational view of a section of the channel, showing the same after extraction of the pieces which are intermediate between the tabs and with its corresponding cover, in an exploded view of the figure, according to the preferred example, representing the moment of the individual bending of a tab, for its extraction.

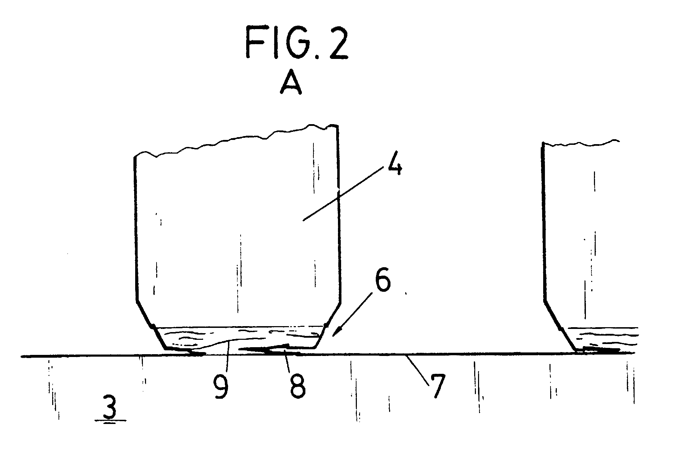

Figure 2 is a detail of the previous figure, showing the commencement of the cutting of the tab.

### PREFERRED EMBODIMENT OF THE INVENTION

In view of what has been previously stated, the present invention refers to a precutting system for the obtention of channel tabs, of those which are provided with channels (1) with covers (2), with their corresponding wings (3) equipped with respective alignments of tabs (4) and which characterizes the provision of a multiplicity of pairs of notches (5) and (5'), with sharp and profiled edges, equidistantly grouped, which define the internal limits of their adjacent tabs (4) and which, simultaneously determine angular slots (6) in their respective bases (7), coinciding with the start of the cut (8) on the bending line (9) produced manually.

In this manner the reliability of the manufacturing of the channels increases, discarding of material as well as burrs on the tabs is not produced and their finish results to be more polished.

This description is not made more extensive with the understanding that any expert in the Art shall have sufficient information to comprehend the scope of the invention and its derived advantages, as well as to proceed to reproduce the same.

It is to be understood that, if the essentiality of the invention is not altered, both the variations in the materials as well as the shape, size and arrangement of the elements are capable of variation characterized within the same.

The terms used during the description and the meaning of the same shall always be considered in a non limitative manner.

## Claims

1. Precutting system for the obtention of channel tabs, which provide channels (1) with covers (2) with their corresponding wings (3) equipped with respective alignments of tabs (4) and which characterizes the provision of a multiplicity of pairs of notches (5) and (5'), with sharp and profiled edges, equidistantly grouped, which define the internal limits of their adjacent tabs (4) and which, simultaneously, determine angular slots (6) in their respective base (7).

2. Precutting system for the obtention of channel tabs, according to the previous claim, characterized in that the angular slot (6) of the base (7) of the tab (4) is the start of the cut (8) of the bending line (9), when the same is manually produced.

3. Channel, according to the previous claims, characterized in that it is provided with an angular double slot (6) opposite to the base (7) of its tabs (4) which make possible the manual extraction of the tab (4).
